(19) Europäisches Patentamt
European Patent Office
Office européen des brevets

(11) **EP 3 237 924 B1**

(12) **FASCICULE DE BREVET EUROPEEN**

(45) Date de publication et mention
de la délivrance du brevet:
**26.02.2020 Bulletin 2020/09**

(21) Numéro de dépôt: **15817358.3**

(22) Date de dépôt: **22.12.2015**

(51) Int Cl.:
*G01S 7/02* (2006.01)          *G01S 7/40* (2006.01)
*G01S 13/44* (2006.01)        *H01Q 9/27* (2006.01)
*G01S 3/02* (2006.01)

(86) Numéro de dépôt international:
**PCT/EP2015/081004**

(87) Numéro de publication internationale:
**WO 2016/102583 (30.06.2016 Gazette 2016/26)**

(54) **PROCÉDÉ DE MESURE D'UNE DIRECTION D'INCIDENCE D'UNE ONDE INCIDENTE POUR UN RÉCEPTEUR À LARGE BANDE INSTANTANÉE ET RÉCEPTEUR ASSOCIÉ**

**VERFAHREN ZUR MESSUNG EINER EINFALLSRICHTUNG EINER EINFALLENDEN WELLE FÜR SOFORTBREITBANDEMPFÄNGER UND ZUGEHÖRIGER EMPFÄNGER**

**METHOD FOR MEASURING A DIRECTION OF INCIDENCE OF AN INCIDENT WAVE FOR AN INSTANTANEOUS WIDEBAND RECEIVER AND ASSOCIATED RECEIVER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1402957**

(43) Date de publication de la demande:
**01.11.2017 Bulletin 2017/44**

(73) Titulaire: **THALES**
**92400 Courbevoie (FR)**

(72) Inventeurs:
• **CORNIC, Pascal**
  **29238 Brest Cedex 3 (FR)**
• **ARTIS, Jean Paul**
  **29238 Brest Cedex (FR)**
• **RENARD, Christian**
  **78851 Elancourt (FR)**

(74) Mandataire: **Lavoix**
**2, place d'Estienne d'Orves**
**75441 Paris Cedex 09 (FR)**

(56) Documents cités:
**DE-A1- 4 421 191      US-A- 3 175 217**
**US-A- 3 229 293        US-A- 4 366 483**
**US-A- 5 065 162        US-A- 5 526 001**

• **HAN-BYUL KIM ET AL: "Cavity-backed Two-arm Spiral Antenna with a Ring-shaped Absorber for Partial Discharge Diagnosis", JOURNAL OF ELECTRICAL ENGINEERING & TECHNOLOGY, vol. 8, no. 4, 1 juillet 2013 (2013-07-01), pages 856-862, XP055223960, Seoul ISSN: 1975-0102, DOI: 10.5370/JEET.2013.8.4.856 cité dans la demande**
• **HETTAK K ET AL: "Practical design of uniplanar broadband subsystems. Application to a wideband hybrid magic tee", MICROWAVE SYMPOSIUM DIGEST, 1994., IEEE MTT-S INTERNATIONAL SAN DIEGO, CA, USA 23-27 MAY 1994, NEW YORK, NY, USA,IEEE, 23 mai 1994 (1994-05-23), pages 915-918vol.2, XP032365977, DOI: 10.1109/MWSYM.1994.335208 ISBN: 978-0-7803-1778-9 cité dans la demande**

**Description**

La présente invention concerne les procédés de mesure de la direction d'incidence d'une onde électromagnétique sur un récepteur à large bande instantanée, utilisés en particulier pour l'écoute et le renseignement d'origine électromagnétique.

On connaît des procédés de mesure de la direction d'incidence d'une onde. Par exemple le document DE 44 21 191 A1 décrit un tel procédé.

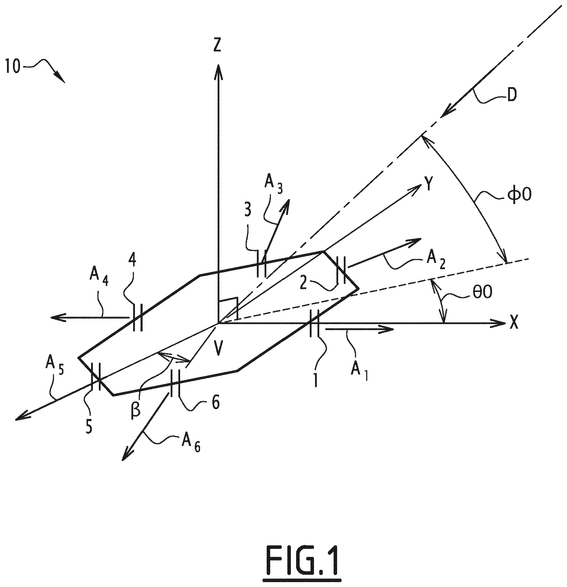

Comme cela est représenté sur la figure 1 le récepteur comporte généralement un réseau d'antennes 10, comportant N antennes, de préférence identiques entre elles. Sur la figure 1, N est égal à six.

Les antennes sont réparties dans un plan XY transversal à l'axe Z d'un mât de support, disposé sensiblement verticalement.

Dans ce plan XY horizontal, les antennes sont disposées de manière à avoir des directions de pointage équidistribuées en angle à l'intérieur du domaine angulaire à couvrir. Par exemple, elles peuvent être disposées sur un polygone régulier, un hexagone sur la figure 1.

Chaque antenne possède un diagramme de rayonnement présentant un maximum selon son axe de pointage Ai.

Le diagramme de rayonnement d'une antenne présente une grande ouverture à 3 dB, typiquement de l'ordre de 50° à 120°.

Les lobes principaux des diagrammes de rayonnement des antennes se recouvrent mutuellement de façon à ce que le réseau couvre 360° dans le plan XY horizontal.

Chaque antenne est capable de couvrir une très large bande de fréquence, typiquement de l'ordre de la dizaine de GHz, se situant à l'intérieur d'une gamme de fréquence s'étendant entre 10 MHz et 100 GHz, de préférence entre 100 MHz et 50 GHz.

Pour un récepteur à large bande instantanée, la mesure de la direction d'incidence D d'une onde incidente, c'est-à-dire la détermination d'un angle de gisement $\Theta0$ dans le plan XY est obtenue par la mise en œuvre d'une méthode de goniométrie d'amplitude. Cette méthode met à profit le fait que les caractéristiques des antennes sont identiques, mais que seul change leur orientation par rapport à la direction d'incidence D de l'onde. La mesure de la direction d'incidence D est alors obtenue par exemple par interpolation d'un diagramme de rayonnement normalisé caractéristique du type d'antenne par les amplitudes des signaux générés par chaque antenne.

Cependant, les procédés connus de mesure de la direction d'incidence d'une onde présentent plusieurs inconvénients.

D'abord, la mesure obtenue est peu précise. Elle est typiquement obtenue avec une précision entre 3 et 10°.

Enfin, la mesure est limitée au seul plan XY horizontal, c'est-à-dire à la détermination de l'angle de gisement. Elle est par conséquent biaisée par la position de la source de l'onde électromagnétique hors du plan XY, c'est-à-dire biaisée par l'angle d'élévation $\phi0$ de la direction d'incidence.

Il est à noter qu'il est connu, par exemple du document US 3229293 A, des antennes à large bande instantanée comportant au moins quatre éléments rayonnants formant chacun un brin, les brins étant enroulés en spirales autour d'un même centre dans un plan transverse à l'axe de pointage de l'antenne. L'antenne comporte alors quatre points d'alimentation, pour lesquelles une formation de faisceau de type monopulse deux plans est possible, en déphasant les différentes alimentations entre elles, par exemple de 90°. Dans ce cas une mesure de la direction d'incidence selon deux plans, c'est-à-dire en gisement et élévation, peut être obtenue. Cependant, ce type d'antennes est d'une technologie complexe, en particulier en très large bande, et nécessite quatre voies d'excitation ou de réception (selon l'utilisation en émetteur ou en récepteur de l'antenne).

L'invention a donc pour but de remédier à ce problème, notamment en proposant un procédé de mesure de la direction d'incidence d'une onde qui permette d'obtenir des mesures plus précises.

L'invention a pour objet un procédé de mesure d'une direction d'incidente d'une onde pour un récepteur à large bande instantanée et un récepteur à large bande instantanée tels que définis par les revendications.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- La figure 1 est une représentation schématique du réseau d'antenne d'un récepteur à large bande instantanée selon l'invention ;
- La figure 2 est une représentation schématique d'un mode de réalisation préférentiel d'une antenne du récepteur large bande instantanée selon l'invention et de sa chaîne de traitement ;
- La figure 3 est un graphique dans le plan en élévation du diagramme de rayonnement « delta » d'une antenne obtenu à partir des signaux en opposition de phase sur les deux brins de l'antenne de la figure 2 ;
- La figure 4 est un graphique dans le plan en élévation du diagramme de rayonnement « sommation » d'une antenne obtenu à partir des signaux en phase sur les deux brins de l'antenne de la figure 2 ; et,

- La figure 5 est une représentation géométrique du calcul mis en œuvre dans le procédé selon l'invention.

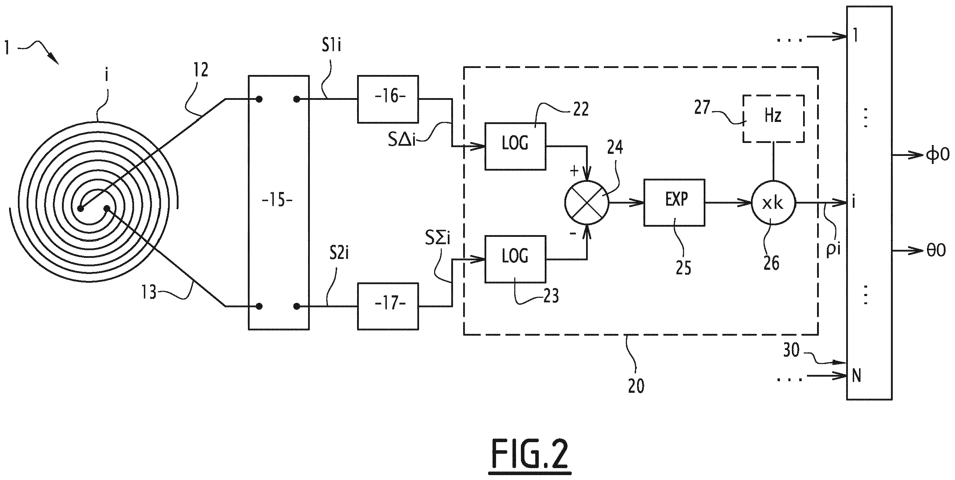

Les figures 1 et 2 représentent un mode de réalisation préférentiel du récepteur à large bande instantanée permettant la mise en œuvre du procédé de mesure de la direction d'incidence d'une onde électromagnétique.

Comme représenté sur la figure 1, le récepteur comporte un réseau 10 constitué de six antennes, repérées par un indice i allant de 1 à 6.

Les antennes i, identiques entre elles, sont des antennes spirales imprimées larges bande.

Chaque antenne i est par exemple conforme à l'antenne décrite dans l'article de Han-Byul Kim et al. « Cavity-backed Two-arm Spiral Antenna with a Ring-shaped Absorber for Partial Discharge Diagnosis" in J Electr Eng Technol Vol. 8, No. 4: 856-862, 2013, http://dx.doi.org/10.5370/JEET.2013.8.4.856. Cette antenne comporte au moins une paire d'éléments rayonnants, qui est constituée par deux brins enroulés en spirale l'un dans l'autre, dans le plan perpendiculaire à l'axe de pointage Ai de l'antenne i, autour d'un même centre.

Les antennes i sont disposées dans le plan XY de sorte que leur axe de pointage Ai repose dans le plan XY.

Pour que le procédé de mesure de la direction d'incidence d'une onde selon l'invention permette une mesure sur 360°, l'angle $\beta$ entre les axes de pointage Ai de deux antennes i successives est choisi de manière à ce que les diagrammes de rayonnement de ces deux antennes fonctionnant dans le même mode (comme cela sera présenté ci-dessous) se chevauchent sur au moins la moitié de l'ouverture d'une antenne.

Ainsi, sur la figure 1, les antennes possèdent une ouverture de 120° et les antennes sont réparties angulairement de manière uniforme, l'angle $\beta$ entre les axes de pointage Ai de deux antennes i successives étant de 60°.

La mise en œuvre du procédé de mesure de la direction d'incidence d'une onde selon l'invention nécessite de disposer de deux diagrammes de rayonnement pour chaque antenne.

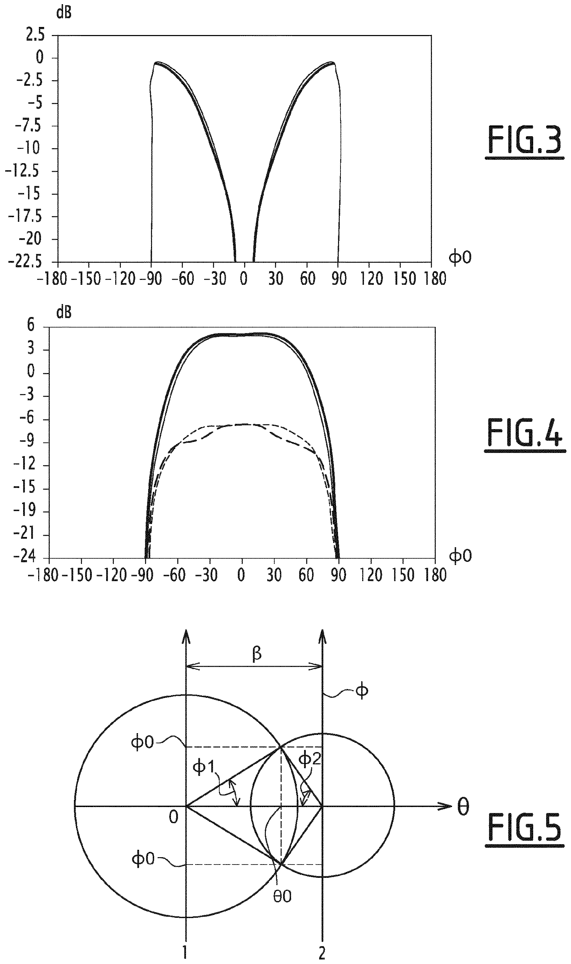

Dans un premier mode de fonctionnement d'une antenne, celle-ci présente un premier diagramme de rayonnement dit diagramme de rayonnement Delta, noté diagramme $\Delta$ dans ce qui suit. Dans le mode de réalisation préférentiel décrit ici en détail, le diagramme $\Delta$ correspond à des signaux en phase sur les deux brins de l'antenne. Le diagramme $\Delta$ correspondant est représenté sur la figure 3, selon l'angle $\Phi$ d'élévation.

Dans un second mode de fonctionnement d'une antenne, celle-ci présente un second diagramme de rayonnement, dit diagramme de rayonnement Somme, noté diagramme $\Sigma$ dans ce qui suit. Dans le mode de réalisation préférentiel décrit ici en détail, le diagramme $\Sigma$ correspond à des signaux en opposition de phase sur les deux brins de l'antenne. Le diagramme $\Sigma$ correspondant est représenté sur la figure 4, selon l'angle $\Phi$ d'élévation.

Ces premier et second diagrammes sont symétriques par rotation autour de l'axe de pointage de l'antenne.

Le diagramme $\Delta$ correspond à un minimum du gain selon l'axe de pointage Ai de l'antenne i tandis que le diagramme $\Sigma$ correspond à un maximum de gain selon l'axe de pointage Ai de l'antenne i.

Comme cela est représenté schématiquement sur la figure 2, en réception, les premier et second signaux correspondant respectivement au premier et second modes de fonctionnement de l'antenne i peuvent être obtenus simultanément, en connectant les deux brins de l'antenne i, via deux liaisons adaptées identiques 12 et 13, à une première et une seconde entrée d'un composant « T magique » large bande 15. Un premier signal S1i correspondant à la différence des signaux collectés sur chacun des brins de l'antenne i sera obtenu sur une première sortie du composant 15 et un second signal S2i correspondant à la somme des signaux collectés sur chacun des brins de l'antenne sera obtenu sur une première sortie du composant 15.

Un tel composant « T magique » large bande est connu et est par exemple décrit dans l'article de J.P. Coupez et al, « Practical design of uniplanar broadband subsystems. Application to a wideband hybrid magic tee », Microwave Symposium Digest, 1994., IEEE MTT-S International, Vol.2, p. 915-918.

Ainsi, la première sortie du composant « T magique » large bande correspond au mode $\Delta$ de fonctionnement de l'antenne i et le premier signal S1i correspond au diagramme $\Delta$. Ainsi, la seconde sortie du composant « T magique » large bande correspond au mode $\Sigma$ de fonctionnement de l'antenne i et le second signal S2i correspond au diagramme $\Sigma$.

En aval du composant 15, une voie $\Delta$ 16 et une voie $\Sigma$ 17 permettent le traitement des signaux délivrés sur les première et seconde sorties du composant 15, en mettant en œuvre des traitements classiques : filtrage, amplification hyperfréquence, détection quadratique, filtrage vidéo, etc.

Parmi ces traitements, est en particulier mis en œuvre un traitement de détection par seuillage de présence d'un signal. Ce traitement peut être effectué sur la voie $\Sigma$ ou sur les deux voies $\Sigma$ et $\Delta$.

Parmi ces traitements, est en particulier mis en œuvre un traitement d'estimation de la fréquence du signal. Ce traitement peut être effectué sur la voie $\Sigma$ ou sur les deux voies $\Sigma$ et $\Delta$. Dans le cas où la fréquence de l'onde incidente est calculée sur les deux voies $\Sigma$ et $\Delta$, on pourra avantageusement utiliser la mesure de fréquence pour vérifier que les signaux détectés correspondent au même émetteur.

Parmi ces traitements, est en particulier mis en œuvre le procédé de mesure de la direction d'incidence de l'onde incidente, qui va maintenant être décrit en relation avec la figure 5.

Après traitement sont obtenus des signaux S$\Delta$i et S$\Sigma$i.

Le procédé de mesure de la direction d'incidence est fondé sur une estimation, pour chaque antenne i, d'un

rapport $S\Delta i/S\Sigma i$, c'est-à-dire du rapport de l'amplitude du signal en sortie de la voie $\Delta$ 16, à l'amplitude du signal en sortie de la voie $\Sigma$ 17.

En effet, de manière générale, le rapport $S\Delta/S\Sigma$ est sensiblement proportionnel à l'angle d'écartométrie, c'est-à-dire ici à l'angle de demi-ouverture $\rho$ du cône des directions d'arrivée possibles de l'onde sur l'antenne considérée.

Ce procédé s'apparente aux procédés mis en œuvre dans les radars monopulse. Cependant, les diagrammes $\Sigma$ et $\Delta$ étant ici de révolution autour de l'axe de pointage de l'antenne, la comparaison des signaux S sur les deux voies $\Sigma$ et $\Delta$ ne permet pas, contrairement aux radars monopulse, de mesurer directement la direction d'incidence, mais permet de mesurer l'angle de demi-ouverture $\rho$ du cône correspondant aux directions d'incidence possibles.

Plus précisément, l'angle de demi-ouverture $\rho$ est calculé selon la relation :

$$\rho = k\, S\Delta/S\Sigma,$$

où k est une constante qui ne dépend que de l'ouverture de l'antenne à une fréquence donnée.

Ainsi, le récepteur 1 comporte, pour chaque antenne i, un moyen 20 de détermination de l'angle de demi-ouverture $\rho i = k\, S\Delta i/S\Sigma i$ des directions d'incidence possibles.

De préférence, la détermination du rapport $\Delta i/\Sigma i$ est réalisé en plaçant, dans la chaîne de détection analogique ou numérique de l'antenne, un amplificateur logarithmique 22 en sortie de la voies $\Delta$, un amplificateur logarithmique 23 en sortie de la voies $\Sigma$, puis un composant 24 propre à soustraire le signal en sortie de la voie $\Sigma$ du signal en sortie de la voie $\Delta$ pour obtenir le logarithme du rapport $\Delta/\Sigma$ selon la relation :

$$(\text{Log}\, (S\Delta i/S\Sigma i) = \text{Log}(S\Delta i) - \text{Log}\, (S\Sigma i)).$$

Un composant 25 est ensuite propre à réaliser une fonction exponentielle, inverse du logarithme, de manière à obtenir en sortie le rapport $S\Delta i/S\Sigma i$ recherché.

Puis un composant 26 est ensuite propre à multiplié par la constante k le rapport $S\Delta i/S\Sigma i$ pour obtenir l'angle de demi-ouverture $\rho i$.

Comme l'ouverture d'une antenne spirale est, au premier ordre, indépendante de la fréquence, k est également indépendant de la fréquence. Cependant, compte tenu des possibles imperfections du diagramme de rayonnement inhérentes à sa plage de fonctionnement étendue en fréquence, il peut être nécessaire de réaliser un calibrage permettant d'ajuster la valeur de k en fonction de la fréquence. Ceci est représenté schématiquement par le bloc 27 sur la figure 2.

De même, la dépendance entre l'angle de demi-ouverture pi et le rapport $S\Delta i/S\Sigma i$ n'étant pas rigoureusement linéaire, il peut être nécessaire, pour améliorer les performances, d'utiliser une table de compensation, obtenue par calibrage, pour améliorer *a posteriori* la valeur de la demi-ouverture déterminée à partir de la relation ci-dessus.

Le procédé se poursuit par une étape de calcul des angles de gisement et d'élévation de la direction d'incidence mis en œuvre par le moyen 30 dans le récepteur 1.

Cette étape est mise en œuvre pour au moins deux antennes adjacentes, par exemple les antennes 1 et 2. Comme indiqué ci-dessus, l'angle de dépointage $\beta$ dans le plan XY entre deux antennes adjacentes est égal à 60°.

On notera que cette valeur correspond au cas à six antennes, présenté ici en détail. Dans un cas général, et si l'on veut couvrir 360° de gisement, l'angle de dépointage entre deux antennes adjacentes est 360°/N, où N est le nombre total d'antennes. En variante, si l'on ne veut couvrir qu'un domaine de gisement D, l'angle de dépointage est D/N.

Pour la première antenne de la paire d'antennes considérée, l'onde incidente arrive avec une direction d'incidence $\theta 0$ en gisement et $\Phi 0$ en élévation de sorte qu'un premier angle de demi-ouverture p1 est déterminé. Pour la seconde antenne de ladite paire d'antennes, l'onde incidente arrive avec une direction d'incidence $\theta 0 + \beta$ en gisement et $\Phi 0$ en élévation, de sorte qu'un second angle de demi-ouverture p2 est déterminé.

Il est alors possible de calculer la valeur des angles d'incidence $\theta 0$ et $\Phi 0$ qui correspondent à l'intersection des premier et second cônes. Pour cela et conformément à la figure 5, on a les relations géométriques suivantes :

$$\rho 1^2 = \theta 0^2 + \Phi 0^2 \qquad\qquad\qquad (1)$$

et

$$\rho 2^2 = (\beta - \theta 0)^2 + \Phi 0^2 \qquad\qquad\qquad (2)$$

Ce qui conduit à :

$$\Theta 0 = (\rho 2^2 - \rho 1^2)/2\beta - \beta/2 \qquad\qquad (3)$$

$$\Phi 0 = \pm [\rho 1^2 - (\rho 2^2 - \rho 1^2)/2\beta - \beta/2]^{-1/2} \qquad\qquad (4)$$

Ces équations conduisent à une ambiguïté, c'est-à-dire à deux solutions symétriques par rapport au plan XY horizontal.

En général, le choix de la solution d'intérêt, donc l'élimination de la solution ambiguë, résulte de l'analyse de la situation conduisant à une limitation du domaine en élévation. Par exemple, dans le cas d'une utilisation en mer, sur un navire, la source de l'onde incidente ne peut pas avoir une élévation négative.

L'angle d'élévation $\Phi 0$ est une information d'intérêt qui peut être utilisée par exemple pour orienter au mieux une contre-mesure de brouillage ou de leurrage. La détermination de cet angle permet donc de se passer de l'usage d'un dispositif complémentaire dédié à la mesure de l'angle d'élévation.

Il est également possible d'utiliser une troisième antenne dépointée par rapport aux deux autres (par exemple en élévation), l'intersection des trois cônes obtenus donnant l'angle de gisement et l'angle d'élévation sans ambiguïté.

Il apparaît que la mesure de l'angle de gisement n'est pas affectée par la valeur de l'angle d'élévation, contrairement à la goniométrie d'amplitude conventionnelle, qui néglige l'angle d'élévation dans l'estimation de l'ange de gisement, ce qui induit un biais.

Ce procédé de mesure de la direction d'incidence permet d'améliorer la précision de la mesure effectuée ; de mesurer à la fois le gisement et l'élévation, avec une précision d'estimation du gisement sensiblement indépendante de la valeur de l'élévation, et réciproquement.

Un autre avantage de la solution proposée est qu'elle peut être facilement mise en œuvre sur des récepteurs existants, en modifiant la chaîne de traitement mais pas l'architecture des récepteurs dont ils sont munis. En effet, cette solution est directement compatible avec les antennes déjà utilisées et n'augmente pas le nombre des antennes à utiliser.

Ce procédé s'applique en particulier aux récepteurs de guerre électronique à large bande instantanée.

Ce procédé de mesure de direction d'incidence peut être appliqué seul ou en complément d'un traitement de goniométrie d'amplitude, pour le rendre plus robuste.

Dans le mode de réalisation présenté ci-dessus en détail, les éléments rayonnants de la paire d'éléments rayonnants considérée pour déterminer un demi-angle d'ouverture d'un cône de directions d'incidence possibles d'une onde forment des diagrammes de rayonnement parfaitement symétriques par rotation autour de l'axe de pointage de l'antenne. Dans ces conditions le diagramme $\Delta$ possède un minimum du gain dans l'axe de pointage de l'antenne, tandis que le diagramme $\Sigma$ possède un maximum de gain dans l'axe de pointage de l'antenne.

Cependant, dans la réalité, il se peut que des écarts, de fabrication par exemple, entre les diagrammes de rayonnement produits par les éléments rayonnants considérés viennent altérer cette symétrie et que les extrémums des diagrammes $\Delta$ et $\Sigma$ ne coïncident plus avec l'axe de pointage de l'antenne. Il peut être tenu compte de cet état de fait par exemple en réalisant une opération de calibrage permettant de déterminer les biais géométriques affectant les diagrammes $\Delta$ et $\Sigma$ afin d'en corriger les effets sur les mesures réalisées.

**Revendications**

1. Procédé de mesure d'une direction d'incidente d'une onde pour un récepteur à large bande instantanée (1), ledit récepteur comportant un réseau (10) d'au moins deux antennes (i) pointant dans des directions différentes et dont les diagrammes de rayonnement respectifs se chevauchent mutuellement, chaque antenne du réseau étant une antenne spirale imprimée large bande, **caractérisé en ce que**, chaque antenne comportant au moins une paire d'éléments rayonnants de manière à pouvoir fonctionner selon un premier mode de fonctionnement associé à un premier diagramme de rayonnement ($\Delta$), les deux éléments rayonnants étant en phase, et selon un second mode de fonctionnement associé à un second diagramme de rayonnement ($\Sigma$), différent du premier diagramme de rayonnement, les deux éléments rayonnants étant en opposition de phase, le procédé consiste :

    - à acquérir, pour chaque antenne (i), un premier signal ($S\Delta i$) correspondant au premier mode de fonctionnement de l'antenne considérée et un second signal ($S\Sigma i$) correspondant au second mode de fonctionnement de l'antenne considérée ;
    - à déterminer, pour chaque antenne, un demi-angle d'ouverture ($\rho i$) d'un cône de directions d'incidence possibles à partir de l'amplitude du premier signal et de l'amplitude du second signal ;
- à calculer l'angle de gisement (Θ0) et/ou l'angle d'élévation (Φ0) de la direction d'incidence par intersection des cônes de directions d'incidence possibles déterminés pour chaque antenne.

2. Procédé selon la revendication 1, dans lequel le demi-angle d'ouverture (ρi) du cône de direction d'incidence possible d'une antenne (i) est déterminé à partir du rapport de l'amplitude du premier signal (SΔi) à l'amplitude du second signal (SΣi).

3. Procédé selon la revendication 2, dans lequel les premier et second diagrammes de rayonnement formés par les éléments rayonnants d'une paire d'éléments rayonnants sont symétriques par rotation autour d'un axe de pointage de l'antenne.

4. Procédé selon la revendication 3, dans lequel le demi-angle d'ouverture ρi du cône de direction d'incidence possible de la i$^{ème}$ antenne du réseau (10) est obtenu selon la relation :

$$\rho i = k\, S\Delta i / S\Sigma i,$$

où k est une constante qui ne dépend que de l'ouverture de l'antenne à une fréquence donnée, SΔi est l'amplitude du premier signal et SΣi est l'amplitude du second signal.

5. Procédé selon l'une quelconque des revendications 2 à 4, dans lequel le rapport de l'amplitude du second signal à l'amplitude du premier signal est obtenu après une étape d'amplification logarithmique des premier et second signaux, une étape de différence entre les signaux amplifiés, et une étape d'amplification exponentielle de la différence obtenue.

6. Procédé selon l'une quelconque des revendications 1 à 5, dans lequel la mesure de l'angle de gisement est réalisée indépendamment de, ou simultanément à la mesure de l'angle d'élévation.

7. Procédé selon l'une quelconque des revendications 1 à 6, dans lequel les premiers diagrammes de rayonnement de deux antennes successives du réseau (10) se recouvrent mutuellement au moins sur la moitié de l'ouverture des antennes, et les seconds diagrammes de rayonnement de deux antennes successives du réseau (10) se recouvrent mutuellement au moins sur la moitié de l'ouverture des antennes.

8. Procédé selon la revendication 1, comportant parallèlement un traitement de goniométrie d'amplitude.

9. Récepteur à large bande instantanée (1), **caractérisé en ce qu'**il comporte :

- un réseau (10) d'au moins deux antennes (i) pointant dans des directions différentes et dont les diagrammes de rayonnement respectifs se chevauchent mutuellement, chaque antenne étant une antenne spirale imprimée large bande comportant au moins une paire d'éléments rayonnants de manière à pouvoir fonctionner selon un premier mode de fonctionnement associé à un premier diagramme de rayonnement (Δ), les deux éléments rayonnants étant en phase, et selon un second mode de fonctionnement associé à un second diagramme de rayonnement (Σ), différent du premier diagramme de rayonnement, les deux éléments rayonnants étant en opposition de phase ;
- un moyen (12, 13, 15) d'acquisition, pour chaque antenne (i), d'un premier signal (SΔi) correspondant au premier mode de fonctionnement de l'antenne considérée et un second signal (SΣi) correspondant au second mode de fonctionnement de l'antenne considérée ;
- un moyen (22, 23, 24, 25, 26) de détermination, pour chaque antenne (i), d'un demi-angle d'ouverture (ρi) d'un cône de directions d'incidence possibles à partir de l'amplitude du premier signal et de l'amplitude du second signal ;
- un moyen (30) de calcul de l'angle de gisement (Θ0) et/ou de l'angle d'élévation (Φ0) de la direction d'incidence par intersection des cônes de directions d'incidence possibles déterminés pour chaque antenne.

10. Récepteur selon la revendication 9, dans lequel les premier et second diagrammes de rayonnement formés par les éléments rayonnants d'une paire d'éléments rayonnants sont symétriques par rotation autour d'un axe de pointage de l'antenne.

**11.** Récepteur selon la revendication 9 ou la revendication 10, dans lequel chaque antenne comporte deux brins, chaque brin constituant un élément rayonnant de l'antenne.

**12.** Récepteur selon la revendication 11, dans lequel le moyen d'acquisition comporte un composant « T magique » large bande, dont une première entrée est reliée à un brin de l'antenne, dont une seconde entrée est reliée à l'autre brin de l'antenne, dont une première sortie délivre le premier signal, et dont une seconde sortie délivre le second signal.

**13.** Récepteur selon l'une quelconque des revendications 9 à 12, dans lequel un moyen de détermination est un moyen analogique ou numérique comportant un amplificateur logarithmique, un soustracteur et un amplificateur exponentiel pour déterminer un rapport de l'amplitude du second signal sur l'amplitude du premier signal.

**Patentansprüche**

**1.** Verfahren zum Messen einer Einfallsrichtung einer Welle für einen Echtzeitbreitband-Verstärker (1), wobei der Verstärker ein Netz (10) von mindestens zwei Antennen (i) aufweist, die in unterschiedliche Richtungen weisen und deren jeweilige Strahlungsdiagramme sich gegenseitig überlappen, wobei jede Antenne des Netzes eine gedruckte Breitband-Spiralantenne ist, **dadurch gekennzeichnet, dass** jede Antenne mindestens ein Paar von abstrahlenden Elementen derart aufweist, dass sie gemäß einem ersten Betriebsmodus arbeiten kann, der einem ersten Strahlungsdiagramm ($\Delta$) zugeordnet ist, wobei die zwei abstrahlenden Elemente in Phase sind, und gemäß einem zweiten Betriebsmodus arbeiten kann, der einem zweiten Strahlungsdiagramm ($\Sigma$), unterschiedlich zum ersten Strahlungsdiagramm, zugeordnet ist, wobei die zwei abstrahlenden Elemente gegenphasig sind, wobei das Verfahren darin besteht:

- für jede Antenne (i) ein erstes Signal (S$\Delta$i) entsprechend einem ersten Betriebsmodus der betrachteten Antenne und ein zweites Signal (S$\Sigma$i) entsprechend einem zweiten Betriebsmodus der betrachteten Antenne zu beschaffen;
- für jede Antenne einen Öffnungshalbwinkel (gi) eines Kegels von möglichen Einfallsrichtungen aus der Amplitude des ersten Signals und der Amplitude des zweiten Signals zu bestimmen;
- den Peilwinkel ($\theta$0) und/oder den Höhenwinkel ($\Phi$0) der Einfallsrichtung durch Schneiden der Kegel der möglichen Einfallsrichtungen, die für jede Antenne bestimmt werden, zu berechnen.

**2.** Verfahren nach Anspruch 1, bei dem der Öffnungshalbwinkel ($\varrho$i) des Kegels der möglichen Einfallsrichtung einer Antenne (i) aus dem Verhältnis der Amplitude des ersten Signals (S$\Delta$i) zu der Amplitude des zweiten Signals (S$\Sigma$i) bestimmt wird.

**3.** Verfahren nach Anspruch 2, bei dem das erste und zweite Strahlungsdiagramm, die von den abstrahlenden Elementen eines Paars von abstrahlenden Elementen gebildet werden, rotationssymmetrisch um eine Peilachse der Antenne sind.

**4.** Verfahren nach Anspruch 3, bei dem der Öffnungshalbwinkel $\varrho$i des Kegels der möglichen Einfallsrichtung der i-ten Antenne des Netzes (10) aus der Beziehung erhalten wird:

$$\varrho i = k\, S\Delta i / S\Sigma i$$

erhalten wird, wobei k eine Konstante ist, die nur von der Antennenöffnung bei einer gegebenen Frequenz abhängt, S$\Delta$i die Amplitude des ersten Signals ist und S$\Sigma$i die Amplitude des zweiten Signals ist.

**5.** Verfahren nach einem beliebigen der Ansprüche 2 bis 4, bei dem das Verhältnis der Amplitude des zweiten Signals zu der Amplitude des ersten Signals nach einem Schritt der logarithmischen Verstärkung des ersten und zweiten Signals, einem Schritt der Differenz zwischen den verstärkten Signalen und einem Schritt der exponentiellen Verstärkung der erhaltenen Differenz erhalten wird.

**6.** Verfahren nach einem beliebigen der Ansprüche 1 bis 5, bei dem die Messung des Peilwinkels unabhängig von oder simultan zur Messung des Höhenwinkels durchgeführt wird.

**7.** Verfahren nach einem beliebigen der Ansprüche 1 bis 6, bei dem die ersten Strahlungsdiagramme von zwei aufeinanderfolgenden Antennen des Netzes (10) sich gegenseitig über mindestens die Hälfte der Antennenöffnung überdecken und die zweiten Strahlungsdiagramme von zwei aufeinanderfolgenden Antennen des Netzes (10) sich gegenseitig mindestens über die Hälfte der Antennenöffnung überdecken.

**8.** Verfahren nach Anspruch 1, das parallel eine Amplitudengoniometrie-Verarbeitung aufweist.

**9.** Echtzeitbreitband-Verstärker (1), **dadurch gekennzeichnet, dass** er umfasst:

- ein Netz (10) von mindestens zwei Antennen (i), die in unterschiedliche Richtungen weisen und deren jeweilige Strahlungsdiagramme sich gegenseitig überlappen, wobei jede Antenne eine gedruckte Breitband-Spiralantenne ist, die mindestens ein Paar von abstrahlenden Elementen derart aufweist, dass sie gemäß einem ersten Betriebsmodus arbeiten kann, der einem ersten Strahlungsdiagramm ($\Delta$) zugeordnet ist, wobei die zwei abstrahlenden Elemente in Phase sind, und gemäß einem zweiten Betriebsmodus arbeiten kann, der einem zweiten Strahlungsdiagramm ($\Sigma$), unterschiedlich zum ersten Strahlungsdiagramm, zugeordnet ist, wobei die zwei abstrahlenden Elemente gegenphasig sind;
- ein Mittel (12, 13, 15) zum Beschaffen für jede Antenne (i) eines ersten Signals ($S\Delta i$) entsprechend einem ersten Betriebsmodus der betrachteten Antenne und eines zweiten Signals ($S\Sigma i$) entsprechend einem zweiten Betriebsmodus der betrachteten Antenne;
- ein Mittel (22, 23, 24, 25, 26) zum Bestimmen für jede Antenne (i) eines Öffnungshalbwinkels ($\varrho i$) eines Kegels von möglichen Einfallsrichtungen aus der Amplitude des ersten Signals und der Amplitude des zweiten Signals;
- ein Mittel (30) zum Berechnen des Peilwinkels ($\theta 0$) und/oder des Höhenwinkels ($\Phi 0$) der Einfallsrichtung durch Schneiden der Kegel von möglichen Einfallsrichtungen, die für jede Antenne bestimmt werden.

**10.** Empfänger nach Anspruch 9, bei dem das erste und zweite Strahlungsdiagramm, die von den abstrahlenden Elementen eines Paars von abstrahlenden Elementen gebildet werden, rotationssymmetrisch um eine Peilachse der Antenne sind.

**11.** Empfänger nach Anspruch 9 oder Anspruch 10, bei dem jede Antenne zwei Teilstücke aufweist, wobei jedes Teilstück ein abstrahlendes Element der Antenne bildet.

**12.** Empfänger nach Anspruch 11, bei dem das Mittel zum Beschaffen eine "magisches-T"-Breitband-Komponente aufweist, deren erster Eingang mit einem Teilstück der Antenne verbunden ist, deren zweite Eingang mit dem anderen Teilstück der Antenne verbunden ist, deren erster Ausgang das erste Signal liefert und deren zweite Ausgang das zweite Signal liefert.

**13.** Empfänger nach einem beliebigen der Ansprüche 9 bis 12, bei dem ein Mittel zum Bestimmen ein analoges oder numerisches Mittel ist, das einen logarithmischen Verstärker, einen Subtrahierer und einen exponentiellen Verstärker zum Bestimmen eines Verhältnisses der Amplitude des zweiten Signals zu der Amplitude des ersten Signals aufweist.

**Claims**

**1.** A method for measuring a direction of incidence of a wave for an instantaneous wideband receiver (1), said receiver including an array (10) of at least two antennas (i) pointing in different directions and the respective radiation patterns of which overlap one another, each antenna of the array being a wideband printed spiral antenna, **characterized in that**, each antenna including at least one pair of radiating elements so as to be able to work in a first operating mode associated with a first radiation pattern ($\Delta$), the two radiating elements being in phase, and according to a second operating mode associated with a second radiation pattern ($\Sigma$), different from the first radiation pattern, the two radiating elements being in phase opposition, the method consists of:

- acquiring, for each antenna (i), a first signal ($S\Delta i$) corresponding to the first operating mode of the antenna considered and a second signal ($S\Sigma i$) corresponding to the second operating mode of the antenna considered;
- determining, for each antenna, an opening half-angle (pi) of a cone of possible directions of incidence from the amplitude of the first signal and the amplitude of the second signal;
- calculating the bearing angle ($\theta 0$) and/or the elevation angle ($\Phi 0$) of the direction of incidence by intersecting the cones of possible directions of incidence determined for each antenna.

**2.** The method according to claim 1, wherein the opening half-angle ($\rho$i) of the cone of possible direction of incidence of an antenna (i) is determined from the ratio of the amplitude of the first signal (S$\Delta$i) over the amplitude of the second signal (S$\Sigma$i).

**3.** The method according to claim 2, wherein the first and second radiation patterns formed by the radiating elements of a pair of radiating elements are symmetrical by rotation around a pointing axis of the antenna.

**4.** The method according to claim 3, wherein the opening half-angle pi of the cone of possible direction of incidence of the i$^{th}$ antenna of the array (10) is obtained according to the relationship:

$$\rho i = k\ S\Delta i / S\Sigma i,$$

where k is a constant that only depends on the opening of the antenna at a given frequency, S$\Delta$i is the amplitude of the first signal and S$\Sigma$i is the amplitude of the second signal.

**5.** The method according to any one of claims 2 to 4, wherein the ratio of the amplitude of the second signal to the amplitude of the first signal is obtained after a step of logarithmic amplification of the first and second signals, a step of difference between the amplified signals, and a step of exponential amplification of the obtained difference.

**6.** The method according to any one of claims 1 to 5, wherein the measurement of the bearing angle is done independently of, or simultaneously with, the measurement of the elevation angle.

**7.** The method according to any one of claims 1 to 6, wherein the first radiation patterns of two successive antennas of the array (10) overlap one another at least over half of the opening of the antennas, and the second radiation patterns of two successive antennas of the array (10) overlap one another at least over half of the opening of the antennas.

**8.** The method according to claim 1, including, in parallel, an amplitude goniometry processing operation.

**9.** An instantaneous wideband receiver (1), **characterized in that** it includes:

- an array (10) of at least two antennas (i) pointing in different directions and the respective radiation patterns of which overlap one another, each antenna being a wideband printed spiral antenna including at least one pair of radiating elements so as to be able to work in a first operating mode associated with a first radiation pattern ($\Delta$), the two radiating elements being in phase, and according to a second operating mode associated with a second radiation pattern ($\Sigma$), different from the first radiation pattern, the two radiating elements being in phase opposition;
- a means (12, 13, 15) for acquiring, for each antenna (i), a first signal (S$\Delta$i) corresponding to the first operating mode of the considered antenna and a second signal (S$\Sigma$i) corresponding to the second operating mode of the considered antenna;
- a means (22, 23, 24, 25, 26) for determining, for each antenna (i), an opening half-angle (pi) of a cone of possible directions of incidence from the amplitude of the first signal and the amplitude of the second signal;
- a means (30) for calculating the bearing angle ($\theta$0) and/or the elevation angle ($\Phi$0) of the direction of incidence by intersecting the cones of possible directions of incidence determined for each antenna.

**10.** The receiver according to claim 9, wherein the first and second radiation patterns formed by the radiating elements of a pair of radiating elements are symmetrical by rotation around a pointing axis of the antenna.

**11.** The receiver according to claim 9 or claim 10, wherein each antenna of the array is a two-strand printed spiral antenna, each strand constituting a radiating element of the antenna.

**12.** The receiver according to claim 11, wherein the acquisition means includes a wideband "magic tee" component, a first input of which is connected to one strand of the antenna, a second input of which is connected to the other strand of the antenna, a first output of which delivers the first signal, and a second output of which delivers the second signal.

13. The receiver according to any one of claims 9 to 12, wherein a determining means is an analog or digital means including a logarithmic amplifier, a subtracter and an exponential amplifier for determining a ratio of the amplitude of the second signal to the amplitude of the first signal.

## FIG.1

FIG.2

FIG.3

FIG.4

FIG.5

13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4421191 A1

- US 3229293 A

**Littérature non-brevet citée dans la description**

- **HAN-BYUL KIM et al.** Cavity-backed Two-arm Spiral Antenna with a Ring-shaped Absorber for Partial Discharge Diagnosis. *J Electr Eng Technol,* 2013, vol. 8 (4), 856-862

- Practical design of uniplanar broadband subsystems. Application to a wideband hybrid magic tee. **J.P. COUPEZ et al.** Microwave Symposium Digest. IEEE MTT-S International, 1994, vol. 2, 915-918